# EUROPÄISCHE PATENTSCHRIFT

(11) **EP 2 495 422 B1**
(45) Veröffentlichungstag und Bekanntmachung des Hinweises auf die Patenterteilung: **11.01.2017**
(21) Anmeldenummer: 12157982.5
(22) Anmeldetag: 02.03.2012
(51) Int. Cl.: F02G 5/02

(54) **Verbrennungsmotor**
Combustion engine
Moteur à combustion

(30) Priorität: 03.03.2011 DE 102011005072
(43) Veröffentlichungstag der Anmeldung: 05.09.2012
(73) Patentinhaber: MAHLE Behr GmbH & Co. KG, 70469 Stuttgart (DE)
(72) Erfinder: Geskes, Peter, 73760 Ostfildern (DE); Pantow, Eberhard, 71364 Winnenden (DE)
(74) Vertreter: Grauel, Andreas

(56) Entgegenhaltungen:
- EP-A1- 2 623 761
- WO-A2-2007/115579
- DE-A1-102009 050 263

## Beschreibung

Die Erfindung betrifft einen Verbrennungsmotor mit einem System zur Nutzung von Abwärme des Verbrennungsmotors mittels des Clausius-Rankine-Kreisprozesses gemäß dem Oberbegriff des Anspruches 1 und ein Verfahren zum Betreiben eines Verbrennungsmotors mit dem System gemäß dem Oberbegriff des Anspruches 6.

Ein solcher Verbrennungsmotor wird in DE 10 2009 050 263 A1 offenbart.

Verbrennungsmotoren werden in verschiedenen technischen Anwendungen zur Umwandlung von Wärmeenergie in mechanische Energie eingesetzt. In Kraftfahrzeugen, insbesondere in Lastkraftwagen, werden Verbrennungsmotoren eingesetzt, um das Kraftfahrzeug fortzubewegen. Der Wirkungsgrad von Verbrennungsmotoren kann durch den Einsatz von Systemen zur Nutzung von Abwärme des Verbrennungsmotors mittels des Clausius-Rankine-Kreisprozesses erhöht werden. Das System wandelt dabei Abwärme des Verbrennungsmotors in mechanische Energie um. Das System umfasst einen Kreislauf mit Leitungen mit einem Arbeitsmedium, z. B. Wasser, eine Arbeitsmediumpumpe zum Fördern des Arbeitsmediums, einen Verdampfer zum Verdampfen des flüssigen Arbeitsmedium, eine Expansionsmaschine, einen Kondensator zum Verflüssigen des dampfförmigen Arbeitsmediums und einen Auffang- und Ausgleichsbehälter für das flüssige Arbeitsmedium. Durch den Einsatz derartiger Systeme in dem Verbrennungsmotor kann bei dem Verbrennungsmotor mit einem derartigen System als Bestandteil des Verbrennungsmotors der Gesamtwirkungsgrad des Verbrennungsmotors erhöht werden.

Als Verdampfer zum Erwärmen und Verdampfen des Arbeitsmediums werden dabei in Kraftfahrzeugen ein Verdampferabgaswärmeübertrager und ein Verdampferabgasrückführwärmeübertrager eingesetzt. Das durch den Verdampferabgaswärmeübertrager geleitete Abgas stammt aus einer Abgasturbine als Hauptabgasstrom und das durch den Verdampferabgasrückführwärmeübertrager geleitete Abgas stammt aus einer Abgasrückführleitung und wird nach dem Durchleiten durch den Verdampferabgasrückführwärmeübertrager wieder dem Verbrennungsmotor zugeführt, indem das Abgas in eine Ladeluftleitung eingeleitet wird. Um einen möglichst hohen Wirkungsgrad des Clausius-Rankine-Kreisprozesses zu erreichen, ist es erforderlich das Arbeitsmedium auf eine möglichst hohe Temperatur zu erwärmen, zu verdampfen und zu überhitzen. Aus thermodynamischer Sicht ist es deshalb sinnvoll, dass aus dem Kondensator ausgeleitete Abgas zuerst durch den Verdampferabgaswärmeübertrager und anschließend durch den Verdampferabgasrückführwärmeübertrager zu leiten. Das durch den Verdampferabgaswärmeübertrager geleitete Abgas weist dabei niedrigere Temperaturen auf als das durch den Verdampferabgasrückführwärmeübertrager geleitete Abgas. Beispielsweise verfügt das durch den Verdampferabgaswärmeübertrager geleitete Abgas über eine Temperatur von 280°C bis 380°C und das durch den Verdampferabgasrückführwärmeübertrager geleitete Abgas weist eine Temperatur im Bereich von 500°C bis 700°C auf. Dadurch kann das Arbeitsmedium im Verdampferabgaswärmeübertrager zunächst erwärmt und wenigstens teilweise verdampft und anschließend im Verdampferabgasrückführwärmeübertrager vollständig verdampft und überhitzt werden. Abweichend hiervon ist es auch bekannt, das Arbeitsmedium nach dem Ausleiten aus dem Kondensator zuerst teilweise durch den Verdampferabgasrückführwärmeübertrager zu leiten, anschließend das teilweise durch den Verdampferabgasrückführwärmeübertrager geleitete Arbeitsmedium durch den Verdampferabgaswärmeübertrager zu leiten und anschließend das durch den Verdampferabgaswärmeübertrager geleitete Arbeitsmedium durch den Verdampferabgasrückführwärmeübertrager zu leiten. Darüber hinaus ist es auch bekannt, den Verdampferabgaswärmeübertrager und den Verdampferabgasrückführwärmeübertrager bezüglich des Fluidstromes mit Arbeitsmedium nach dem Ausleiten aus dem Kondensator parallel zu schalten.

Am Verdampferabgasrückführwärmeübertrager treten an der Abgaseintrittsseite stark erhöhte Temperaturen auf, das zu hohen thermischen Dehnungen und zu Schäden am Verdampferabgasrückführwärmeübertrager führt. Die hohen Temperaturen im Verdampferabgasrückführwärmeübertrager führen zu einer inhomogenen Aufteilung des Arbeitsmediums und dadurch zu einem lokalen Austrocknen (dry-out) in einzelnen Bereichen des Verdampferabgasrückführwärmeübertragers. Die Folge sind sehr hohe lokale Temperaturen, sogenannte Hot Spots, die zu Leistungsverminderungen führen können. Bei einer Verwendung von Ethanol oder organischen Arbeitsmedien des Clausius-Rankine-Kreisprozesses führen die Hot Spots zu Zersetzungen, da hier Wandtemperaturen von über 400°C auftreten können. Auch Schmieröl, welches sich im Arbeitsmedium zur Schmierung der Expansionsmaschine befindet, kann durch die hohen Temperaturen im Verdampferabgasrückführwärmeübertrager zersetzt werden.

Die Aufgabe der vorliegenden Erfindung besteht deshalb darin, einen Verbrennungsmotor und ein Verfahren zum Betreiben eines Verbrennungsmotors mit einem System zur Nutzung von Abwärme eines Verbrennungsmotors mittels des Clausius-Rankine-Kreisprozesses zur Verfügung zu stellen, bei dem der Verdampferabgasrückführwärmeübertrager geringen thermischen Beanspruchungen ausgesetzt ist und damit eine hohe Lebensdauer aufweist.

Diese Aufgabe wird gelöst mit einem Verbrennungsmotor mit einem System zur Nutzung von Abwärme des Verbrennungsmotors mittels des Clausius-Rankine-Kreisprozesses, gemäß dem unabhängigen Anspruch 1.

In der Leitung, die zwischen dem Verdampferabgasrückführwärmeübertrager und dem Verdampferabgaswärmeübertrager angeordnet ist, kann eine Dampfmessstelle angeordnet sein, mit dem der Dampfanteil hinter dem Verdampferabgasrückführwärmeübertrager erfasst und dann auch mittels Pumpe geregelt werden kann. Diese Dampfmessung kann über ein Drosselorgan erfolgen, an dem der Differenzdruck gemessen wird. Mit dem gemessenen Fluidmassenstrom kann dann über ein Druckverlustkennfeld der vorliegende Dampfgehalt ermittelt werden. Alternativ kann der Dampfgehalt auch über eine Dichtemessung oder eine Leitfähigkeitsmesssonde ermittelt werden.

Der Verdampferabgasrückführwärmeübertrager und der Verdampferabgaswärmeübertrager sind somit bezüglich des Fluidstromes mit Arbeitsmedium in Reihe geschaltet und das Arbeitsmedium durchströmt zuerst vollständig den Verdampferabgasrückführwärmeübertrager und anschließend vollständig den Verdampferabgaswärmeübertrager. Das durch den Verdampferabgasrückführwärmeübertrager geleitete Abgas weist höhere Temperaturen, z. B. im Bereich von 500° bis 700°C auf als das durch den Verdampferabgaswärmeübertrager geleitete Abgas. Dadurch erwärmt sich der Verdampferabgasrückführwärmeübertrager nicht auf sehr hohe Temperaturen, weil in den Verdampferabgasrückführwärmeübertrager unmittelbar das flüssige aus dem Kondensator ausgeleitete und von der Hochdruckpumpe geförderte Arbeitsmedium eingeleitet wird. Dadurch treten an dem Verdampferabgasrückführwärmeübertrager im Allgemeinen nur Temperaturen von bis maximal 350°C auf, so dass nachteilige Hot Spots mit sehr hohen Temperaturen, die zu einer Zersetzung von organischen Arbeitsmedium oder von Schmieröl im Arbeitsmedium führen können, vermieden werden. Ferner können dadurch die thermischen Beanspruchungen des Verdampferabgasrückführwärmeübertragers stark reduziert werden, so dass dieser eine lange Lebensdauer aufweist. Im Verdampferabgasrückführwärmeübertrager wird das Arbeitsmedium im Allgemeinen nur teilweise verdampft, z. B. auf einem Dampfgehalt von ungefähr 75 %. Dadurch kann ein lokales Austrocknen des Verdampferabgasrückführwärmeübertragers verhindert werden. Das aus dem Verdampferabgasrückführwärmeübertrager ausgeleitete Zweiphasengemisch an Arbeitsmedium wird anschließend dem Verdampferabgaswärmeübertrager zugeführt und in diesen vollständig verdampft. Das durch den Verdampferabgaswärmeübertrager geleitete Abgas weist nur Temperaturen im Bereich von 280°C bis 380°C auf, so dass sich im Verdampferabgaswärmeübertrager das Arbeitsmedium im Allgemeinen nur auf Temperaturen von bis zu maximal 350°C erwärmt. Dadurch kann eine Zersetzung von organischem Arbeitsmedium oder Ethanol sowie von Schmieröl im Wesentlichen ausgeschlossen werden und es treten an keiner Stelle Überhitzungsbereiche auf.

Insbesondere ist das durch den Verdampferabgasrückführwärmeübertrager geleitete Arbeitsmedium ausschließlich das aus dem Kondensator unmittelbar ausgeleitete Arbeitsmedium und/oder das durch den Verdampferabgaswärmeübertrager geleitete Arbeitsmedium ist ausschließlich das aus dem Verdampferabgasrückführwärmeübertrager unmittelbar ausgeleitete Arbeitsmedium. Das aus dem Kondensator ausgeleitete Arbeitsmedium wird somit nicht unmittelbar durch den Verdampferabgaswärmeübertrager nach dem Ausleiten aus dem Kondensator geleitet, sondern wird zuerst vollständig durch den Verdampferabgasrückführwärmeübertrager geleitet nach dem Ausleiten aus dem Kondensator und erst anschließend dem Verdampferabgaswärmeübertrager zugeführt.

In einer weiteren Ausgestaltung weist der Kreislauf für das Arbeitsmedium keine unmittelbar von dem Kondensator zu dem Verdampferabgaswärmeübertrager führende Leitung auf und/oder eine Auslassöffnung für Abgas des Verdampferabgaswärmeübertragers mündet in die Umgebung und eine Auslassöffnung für Abgas des Verdampferabgasrückführwärmeübertragers mündet in eine Ladefuftleitung.

In einer ergänzenden Ausführungsform ist das Arbeitsmedium und das Abgas nach dem Gegenstromprinzip durch den Verdampferabgaswärmeübertrager leitbar.

Vorzugsweise ist das Arbeitsmedium und das Abgas nach dem Gegenstromprinzip durch den Verdampferabgasrückführwärmeübertrager leitbar und/oder von dem Verbrennungsmotor ist ein in dieser Schutzrechtsanmeldung beschriebenes Verfahren ausführbar.

Gemäß dem unabhängigen Anspruch 6 wird ein erfindungsgemäßes Verfahren zum Betreiben eines Verbrennungsmotors mit einem System zur Nutzung von Abwärme des Verbrennungsmotors mittels des Clausius-Rankine-Kreisprozesses, insbesondere eines in dieser Schutzrechtsanmeldung beschriebenen Verbrennungsmotors, vorgeschlagen.

In einer Variante wird das Arbeitsmedium nach dem Durchleiten durch den Verdampferabgasrückführwärmeübertrager, insbesondere ausschließlich, dem Verdampferabgaswärmeübertrager zugeführt.

Zweckmäßig wird das Arbeitsmedium während des Leitens von dem Kondensator zu dem Verdampferabgasrückführwärmeübertrager durch keinen Wärmeübertrager, insbesondere Abgaswärmeübertrager oder Verdampfer, geleitet und/oder das Arbeitsmedium wird während des Leitens von dem Verdampferabgasrückführwärmeübertrager zu dem Verdampferabgaswärmeübertrager durch keinen Wärmeübertrager, insbesondere Abgaswärmeübertrager oder Verdampfer, geleitet.

In einer weiteren Ausführungsform wird das durch den Verdampferabgaswärmeübertrager geleitete Abgas in die Umgebung abgeleitet und das durch dem Verdampferabgasrückführwärmeübertrager geleitete Abgas wird dem Verbrennungsmotor zugeführt.

Insbesondere wird das Arbeitsmedium in dem Kreislauf als Wärmeübertrager nur durch den Kondensator, den Verdampferabgaswärmeübertrager und den Verdampferabgasrückführwärmeübertrager geleitet und/oder das Arbeitsmedium wird von einer Arbeitsmediumpumpe in einem Kreislauf gefördert.

In einer weiteren Ausgestaltung ist die Expansionsmaschine eine Turbine oder eine Hubkolbenmaschine.

In einer weiteren Ausgestaltung ist von dem System als Bestandteil des Verbrennungsmotors die Abwärme des Abgashauptstromes des Verbrennungsmotors und die Abwärme der Abgasrückführung nutzbar.

In einer weiteren Ausgestaltung umfasst das System einen Generator. Der Generator ist von der Expansionsmaschine antreibbar, so dass das System damit elektrische Energie oder elektrischen Strom zur Verfügung stellen kann.

In einer weiteren Ausgestaltung wird als Arbeitsmedium des Systems Wasser als Reinstoff, R245fa, Ethanol (Reinstoff oder Gemisch von Ethanol mit Wasser), Methanol (Reinstoff oder Gemisch von Methanol und Wasser) längerkettige Alkohole C5 bis C10, längerkettige Kohlenwasserstoffe C5 (Pentan) bis C8 (Oktan), Pyridin (Reinstoff oder Gemisch von Pyridin mit Wasser), Methylpyridin (Reinstoff oder Gemisch von Methylpyridin mit Wasser), Trifluorethanol (Reinstoff oder Gemisch von Trifluorethanol mit Wasser), Hexafluorbenzol, wenigstens ein Silikonöl, Silikonöle, eine Wasser/Ammoniaklösung und/oder ein Wasser-Ammoniak-Gemisch eingesetzt.

Im Nachfolgenden wird ein Ausführungsbeispiel der Erfindung unter Bezugnahme auf die beigefügten Zeichnungen näher beschrieben. Es zeigt:
- Fig. 1: eine stark vereinfachte Darstellung eines Verbrennungsmotors mit einem System zur Nutzung von Abwärme des Verbrennungsmotors.
- Fig. 2: Temperaturdiagramm für eine Vorrichtung gemäß Stand der Technik
- Fig. 3: Temperaturdiagramm für eine erfindungsgemäße Vorrichtung.

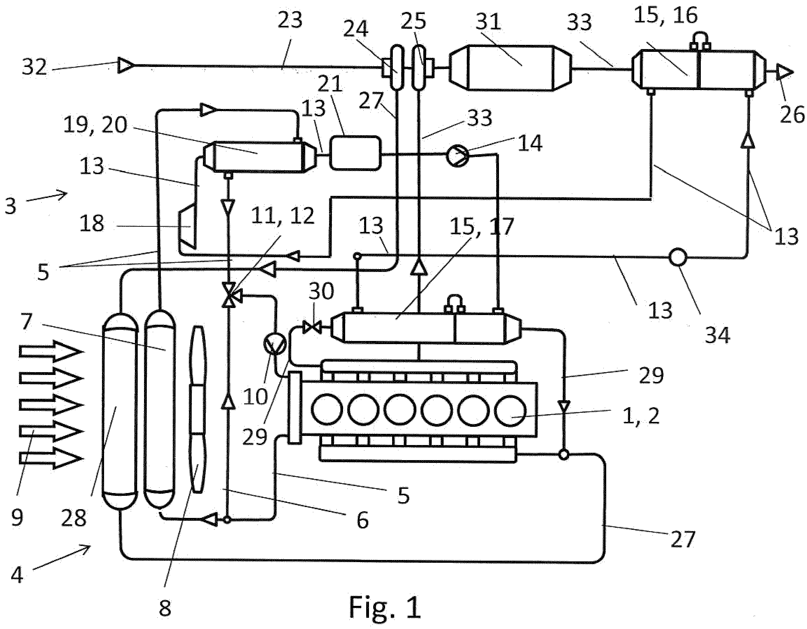

In Fig. 1 ist ein als Hubkolbenverbrennungsmotor 2 ausgebildeter Verbrennungsmotor 1 dargestellt, der ein System 3 zur Nutzung von Abwärme des Verbrennungsmotors 1 mittels des Clausius-Rankine-Kreisprozesses aufweist. Der Verbrennungsmotor 1 weist einen Ladeluftverdichter 24 auf. Der Ladeluftverdichter 24 saugt Frischluft 32 durch eine Frischluftleitung 23 an und verdichtet die Frischluft 32 in eine Ladeluftleitung 27 und ein in die Ladeluftleitung 27 eingebauter Ladeluftkühler 28 kühlt die Ladeluft vor der Zuführung zu dem Verbrennungsmotor 1 ab, indem die Wärme an Kühlluft 9 abgegebenen wird. Durch eine Abgasleitung 33 wird Abgas vom Verbrennungsmotor 1 abgleitet und in eine Abgasturbine 25, eine Abgasnachbehandlungseinheit 31 und in einem als Verdampferabgaswärmeübertrager 16 ausgebildeten Verdampfer 15 abgekühlt und anschließend das Abgas 26 in die Umgebung geleitet. Die von dem Abgas 26 angetriebene Abgasturbine 25 treibt den Ladeluftverdichter 24 an. Außerdem wird ein Teil des von dem Verbrennungsmotor 1 abgegebenen Abgases 26 durch eine Abgasrückführleitung 29 mit einem Abgasventil 30 der Ladeluftleitung 27 zugeführt und vorher durch einen Verdampferabgasrückführwärmeübertrager 17 geleitet. Das durch die Abgasleitung 33 aus dem Verbrennungsmotor 1 abgeleitete Abgas 26 wird nicht durch den Verdampferabgasrückführwärmeübertrager 17 geleitet. In der Leitung 13, die zwischen dem Verdampferabgasrückführwärmeübertrager 17 und dem Verdampferabgaswärmeübertrager 16 angeordnet ist, kann eine Dampfmessstelle 34 angeordnet sein, mit dem der Dampfanteil hinter dem Verdampferabgasrückführwärmeübertrager 17 erfasst und dann auch mittels Pumpe 14 geregelt werden kann.

Ein Kühlmittelkreislauf 4 mit Kühlmittelleitungen 5 wird von Kühlmittel durchströmt und dient zur Kühlung des Verbrennungsmotors 1. Hierzu ist in den Kühlmittelkreislauf 4 ein Kühlmittelwärmeübertrager 7 integriert. Die von dem Kühlmittel am Verbrennungsmotor 1 aufgenommene Wärme wird in dem Kühlmittelwärmeübertrager 7 an die Umgebungsluft als Kühlluft 9 abgegebenen. Eine in den Kühlmittelkreislauf 4 integrierte Kühlmittelumwälzpumpe 10 fördert das Kühlmittel in den Kühlmittelleitungen 5. Ein Gebläse 8 fördert hierzu die Kühlluft 9 zu dem Kühlmittelwärmeübertrager 7 und zu dem Ladeluftkühler 28.

Das System 3 weist Leitungen 13 mit einem Arbeitsmedium auf. In den Kreislauf mit dem Arbeitsmedium sind eine Expansionsmaschine 18, ein Kondensator 19 als Kondensatorwärmeübertrager 20, ein Auffang- und Ausgleichsbehälter 21 sowie eine Arbeitsmediumpumpe 14 und zwei Verdampfer 15 integriert. Die beiden Verdampfer 15 sind dabei der Verdampferabgaswärmeübertrager 16 in dem das Arbeitsmedium von Abwärme des durch die Abgasleitung 33 geleiteten verdampft bzw. erwärmt wird und der Verdampferabgasrückführwärmeübertrager 17 in dem das Arbeitsmedium von dem durch die Abgasrückführleitung 29 geleiteten Abgases verdampft bzw. erwärmt wird. Das aus dem Kondensator 19 ausgeleitete Arbeitsmedium wird ausschließlich zuerst dem Verdampferabgasrückführwärmeübertrager 17 zugeführt und das aus dem Verdampferabgasrückführwärmeübertrager 17 ausgeleitete Arbeitsmedium wird ausschließlich zuerst dem Verdampferabgaswärmeübertrager 16 mit den Leitungen 13 zugeführt.

Von der Arbeitsmediumpumpe 14 wird das flüssige Arbeitsmedium aus dem Auffang- und Ausgleichsbehälter 21 angesaugt und auf ein höheres Druckniveau in dem Kreislauf angehoben, in die Verdampfer 15 gepumpt und anschließend verdampft das flüssige Arbeitsmedium in den Verdampfern 15 und leistet anschließend in der Expansionsmaschine 18 mechanische Arbeit, indem das gasförmige Arbeitsmedium, insbesondere Wasser, expandiert und darauffolgend einen geringen Druck aufweist. In dem Kondensator 19 als Kondensatorwärmeübertrager 20 wird das gasförmige Arbeitsmedium verflüssigt und anschließend wieder dem Auffang- und Ausgleichsbehälter 15 zugeführt. Die von der Expansionsmaschine 18 zur Verfügung gestellte mechanische Energie kann beispielsweise direkt zur Fortbewegung eines nicht dargestellten Lastkraftwagens genutzt werden oder mit einem nicht dargestellten Generator in elektrische Energie umgewandelt werden.

Das aus dem Kühlmittelwärmeübertrager 7 ausgeleitete Kühlmittel wird unmittelbar, d. h. mit im Wesentlichen keiner Temperaturänderung, dem Kondensatorwärmeübertrager 20 durch die Kühlmittelleitung 5 zugeführt. Zur Abkühlung des Arbeitsmediums in dem Kondensatorwärmeübertrager 20 wird ausschließlich Kühlmittel verwendet, welches nach dem Durchleiten durch den Kühlmittelwärmeübertrager 7 im Kühlmittelwärmeübertrager 7 gekühlt worden ist. Damit kann dem Kondensatorwärmeübertrager 20 Kühlmittel auf einem sehr niedrigen Temperaturniveau zur Verfügung gestellt werden. Mit einem als 3/2-Wegeventil 12 ausgebildeten Steuerorgan 11 wird die Temperatur des Kühlmittels in dem Kühlmittelkreislauf 4 gesteuert und/oder geregelt. Eine Bypass-Kühlmittelleitung 6 entnimmt an der Kühlmittelleitung 5 von dem Verbrennungsmotor 1 zu dem Kühlmittelwärmeübertrager 7 Kühlmittel und leitet dieses zu dem 3/2-Wegeventil 12. Am 3/2-Wegeventil 12 kann dieses von der oben beschriebenen Kühlmittelleitung 5 entnommene Kühlmittel wieder der Kühlmittelleitung 5 zugeführt werden, welche von dem 3/2-Wegeventil 12 zu dem Verbrennungsmotor 1 führt. In diese Kühlmittelleitung 5 von dem 3/2-Wegeventil 12 zu dem Verbrennungsmotor 1 ist außerdem auch die Kühlmittelumwälzpumpe 10 integriert. Je mehr Kühlmittel von der Bypass-Kühimittelleitung 6 der Kühlmittelleitung 5 zwischen dem Verbrennungsmotor 1 und dem Kühlmittelwärmeübertrager 7 entnommen wird, desto weniger Kühlmittel wird durch den Kühlmittelwärmeübertrager 7 geleitet und desto mehr steigt die Temperatur in dem Kühlmittel an und umgekehrt. Ein nicht dargestellter Temperatursensor in dem Kühlmittelkreislauf 4 erfasst die Temperatur des Kühlmittels und steuert und/oder regelt diese entsprechend einem vorgegebenen Sollwert. Dieser nicht dargestellte Temperatursensor ist dabei vorzugsweise in der Kühlmittelleitung 5 von dem Steuerorgan 11 zu dem Verbrennungsmotor 1 eingebaut. Zweckmäßig ist dieser nicht dargestellte Temperatursensor Bestandteil des 3/2-Wegeventils 12. Der Sollwert für die Temperatur des Kühlmittels, welche in der Kühlmittelleitung 5 dem Verbrennungsmotor 1 zugeführt wird, liegt beispielsweise in einem Bereich zwischen 85°C und 95°C.

Der Kondensator 19 ist ein Kondensatorwärmeübertrager 20 und wird von Kühlmittel durchströmt. Mittels des Kühlmittels wird das Arbeitsmedium in dem Kondensator 19 abgekühlt und kondensiert. Das aus dem Kondensator 19 ausgeleitete Arbeitsmedium wird nach dem Durchleiten durch den Auffang- und Ausgleichsbehälter 21 mittels der Arbeitsmediumpumpe 14 vollständig dem Verdampferabgasrückführwärmeübertrager 17 zugeführt (Fig. 1). Im Verdampferabgasrückführwärmeübertrager 17 wird das Arbeitsmedium teilweise verdampft und das aus dem Verdampferabgasrückführwärmeübertrager 17 ausströmende Arbeitsmedium als Zweiphasengemisch wird anschließend durch die Leitung 13 dem Verdampferabgaswärmeübertrager 16 zugeführt. Im Verdampferabgaswärmeübertrager 16 wird das Arbeitsmedium vollständig verdampft und überhitzt auf eine Temperatur von ca. 350°C. Das durch den Verdampferabgasrückführwärmeübertrager 17 geleitete Abgas weist Temperaturen im Bereich von 500°C bis 700°C und das durch den Verdampferabgaswärmeübertrager 16 geleitete Abgas weist Temperaturen im Bereich von 280°C bis 380°C auf. Im Verdampferabgasrückführwärmeübertrager 17 wird somit zunächst eine Vorerwärmung und Teilverdampfung des Arbeitsmediums vor der Zuführung zu dem Verdampferabgaswärmeübertrager 16 ausgeführt. Das Arbeitsmedium wird dem Verdampferabgasrückführwärmeübertrager 17 mit einer sehr niedrigen Temperatur flüssig zugeführt. Trotz der hohen des durch den Verdampferabgasrückführwärmeübertragers 17 geleiteten Temperatur des Abgases treten dadurch im Arbeitsmedium im Verdampferabgasrückführwärmeübertrager 17 keine Temperaturen auf, welche zu einer Zersetzung von Ethanol oder organischen Arbeitsmedium führen können. Ferner treten auch keine Hot Spots dadurch am Verdampferabgasrückführwärmeübertrager 17 auf. Die thermische Beanspruchung der mechanischen Komponenten des Verdampferabgasrückführwärmeübertragers 17 sind dadurch gering, so dass dadurch der Verdampferabgasrückführwärmeübertrager 17 eine sehr lange Lebensdauer in vorteilhafter Weise aufweist.

Insgesamt betrachtet sind mit dem erfindungsgemäßen Verbrennungsmotor 1 und dem erfindungsgemäßen Verfahren wesentliche Vorteile verbunden. Das Arbeitsmedium wird im Verdampferabgasrückführ-Wärmeübertrager 17 nur geringfügig erwärmt und im Verdampferabgaswärmeübertrager 16 aufgrund der Temperatur des Abgases, welches den Verdampferabgaswärmeübertrager 16 durchströmt, nur auf Temperaturen von maximal 350°C im Verdampferabgaswärmeübertrager 16 erwärmt. Dadurch können die thermischen Beanspruchungen des Verdampferabgasrückführwärmeübertragers 17 sehr gering gehalten werden und es treten weder am Verdampferabgasrückführwärmeübertrager 17 noch insbesondere am Verdampferabgaswärmeübertrager 16 Temperaturen an Arbeitsmedium auf, welche zu einer Zersetzung von Ethanol oder organischen Arbeitsmedien führen können. Auch im Arbeitsmedium enthaltenes Schmieröl wird dadurch nicht zersetzt, weil das Arbeitsmedium den Verdampferabgaswärmeübertrager 16 mit einer Temperatur von maximale 350°C verlässt und anschließend der Expansionsmaschine 18 gasförmig zugeführt wird. Dadurch kann in technisch einfacher Weise ohne eine aufwendige Regelung des Massenstromes an Arbeitsmedium eine Zersetzung des Arbeitsmediums vermieden und eine hohe Lebensdauer des Verdampferabgasrückführwärmeübertragers 17 sowie auch des Verdampferabgaswärmeübertragers 16 erreicht werden.

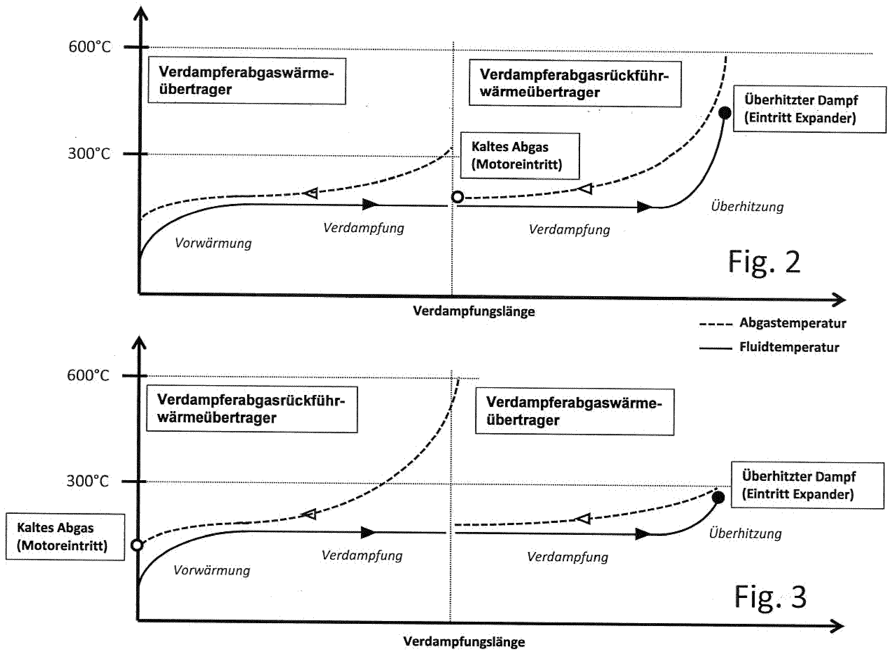

In Fig. 2 und Fig. 3 sind nochmal die grundsätzlichen Temperaturverläufe der Abgasseite und der Fluidseite dargestellt. Fig. 2 zeigt die Verläufe für eine serielle Verschaltung gemäß Stand der Technik. Hier treten hohe Dampftemperaturen auf und die Abkühlung des Abgases ist noch nicht ausreichend, so dass ein zweiter kühlmittelgekühlter Abgaskühler hinter dem Verdampfer angeordnet sein muss, um die für die Emissionen erforderlichen niedrigen Abgastemperaturen zu erreichen.

Fig. 3 zeigt die Temperaturverläufe für die erfindungsgemäße Verschaltung. Hierbei werden sowohl niedrige Abgasaustrittstemperaturen (Kaltes Abgas) als auch nur moderate Dampftemperaturen (Eintritt Expander) erreicht, so dass eine Verbesserung hinsichtlich Festigkeit und auch Zersetzungsrisiko bei organischen Arbeitsmedien erreicht wird.

### Bezugszeichenliste

- 1: Verbrennungsmotor
- 2: Hubkolbenverbrennungsmotor
- 3: System
- 4: Kühlmittelkreislauf
- 5: Kühlmittelleitung
- 6: Bypass-Kühlmittelleitung
- 7: Kühlmittelwärmeübertrager
- 8: Gebläse
- 9: Kühlluft
- 10: Kühlmittelumwälzpumpe
- 11: Steuerorgan
- 12: 3/2-Wegenventil in Kühlmittelkreislauf
- 13: Leitung
- 14: Arbeitsmediumpumpe
- 15: Verdampfer
- 16: Verdampferabgaswärmeübertrager
- 17: Verdampferabgasrückführwärmeübertrager
- 18: Expansionsmaschine
- 19: Kondensator
- 20: Kondensatorwärmeübertrager
- 21: Auffang- und Ausgleichsbehälter
- 22: -
- 23: Frischluftleitung
- 24: Ladeluftverdichter
- 25: Abgasturbine
- 26: Abgas
- 27: Ladeluftleitung
- 28: Ladeluftkühler
- 29: Abgasrückführleitung
- 30: Abgasventil
- 31: Abgasnachbehandlungseinheit
- 32: Frischluft
- 33: Abgasleitung
- 34: Dampfgehaltsmesssensor

## Patentansprüche

1. Verbrennungsmotor (1) mit einem System (3) zur Nutzung von Abwärme des Verbrennungsmotors (1) mittels des Clausius-Rankine-Kreisprozesses, das System (3) umfassend
- einen Kreislauf mit Leitungen (13) mit einem Arbeitsmedium, insbesondere Wasser, zur Bildung des Systems (3),
- eine Arbeitsmediumpumpe (14) zum Fördern des Arbeitsmediums,
- einen Verdampferabgaswärmeübertrager (16) und einen Verdampferabgasrückführwärmeübertrager (17) zum Erwärmen und/oder Verdampfen des flüssigen Arbeitsmediums mit Abgas,
- eine Expansionsmaschine (18),
- einen Kondensator (19) zum Verflüssigen des dampfförmigen Arbeitsmediums,
- vorzugsweise einen Auffang- und Ausgleichsbehälter (21) für das flüssige Arbeitsmedium,
wobei die Leitung (13) für das Arbeitsmedium von dem Kondensator (19) zu dem Verdampferabgasrückführwärmeübertrager (17) geführt ist, so dass das Arbeitsmedium nach dem Durchströmen des Kondensators (19) zuerst den Verdampferabgasrückführwärmeübertrager (17) durchströmt und die Leitung (13) für das Arbeitsmedium von dem Verdampferabgasrückführwärmeübertrager (17) zu dem Verdampferabgaswärmeübertrager (16) geführt ist, so dass das Arbeitsmedium nach dem Durchströmen des Verdampferabgasrückführwärmeübertragers (17) zuerst den Verdampferabgaswärmeübertrager (16) durchströmt, **dadurch gekennzeichnet, dass**
das Abgas durch den Verdampferabgasrückführwärmeübertrager Temperaturen im Bereich von 500 bis 700°C aufweist und das Abgas durch den Verdampferabgaswärmeübertrager Temperaturen im Bereich von 280 bis 380°C aufweist.

2. Verbrennungsmotor nach Anspruch 1,
**dadurch gekennzeichnet, dass**
das durch den Verdampferabgasrückführwärmeübertrager (17) geleitete Arbeitsmedium ausschließlich das aus dem Kondensator (19) unmittelbar ausgeleitete Arbeitsmedium ist
und/oder
das durch den Verdampferabgaswärmeübertrager (16) geleitete Arbeitsmedium ausschließlich das aus dem Verdampferabgasrückführwärmeübertrager (17) unmittelbar ausgeleitete Arbeitsmedium ist.

3. Verbrennungsmotor nach Anspruch 1 oder 2,
**dadurch gekennzeichnet, dass**
der Kreislauf für das Arbeitsmedium keine unmittelbar von dem Kondensator (19) zu dem Verdampferabgaswärmeübertrager (16) führende Leitung (13) aufweist
und/oder
eine Auslassöffnung für Abgas des Verdampferabgaswärmeübertragers (16) in die Umgebung mündet und eine Auslassöffnung für Abgas des Verdampferabgasrückführwärmeübertragers (17) in eine Ladeluftleitung (27) mündet.

4. Verbrennungsmotor nach einem oder mehreren der vorhergehenden Ansprüche,
**dadurch gekennzeichnet, dass**
das Arbeitsmedium und das Abgas nach dem Gegenstromprinzip durch den Verdampferabgaswärmeübertrager (16) leitbar ist.

5. Verbrennungsmotor nach einem oder mehreren der vorhergehenden Ansprüche,
**dadurch gekennzeichnet, dass**
das Arbeitsmedium und das Abgas nach dem Gegenstromprinzip durch den Verdampferabgasrückführwärmeübertrager (17) leitbar ist und/oder
von dem Verbrennungsmotor (1) ein Verfahren gemäß einem oder mehreren der Ansprüche 6 bis 10 ausführbar ist.

6. Verfahren zum Betreiben eines Verbrennungsmotors (1) mit einem System (3) zur Nutzung von Abwärme des Verbrennungsmotors (1) mittels des Clausius-Rankine-Kreisprozesses, insbesondere eines Verbrennungsmotors (1) gemäß einem oder mehrerer der vorhergehenden Ansprüche, mit den Schritten:
- Leiten eines Arbeitsmediums durch einen Verdampferabgaswärmeübertrager (16) und einen Verdampferabgasrückführwärmeübertrager (17), so dass das Arbeitsmedium erwärmt und verdampft wird,
- Leiten von Abgas durch den Verdampferabgaswärmeübertrager (16) und den Verdampferabgasrückführwärmeübertrager (17),
- Leiten des gasförmigen Arbeitsmediums zu einer Expansionsmaschine (18), in welcher das gasförmige Arbeitsmedium expandiert und Arbeit leistet,
- Leiten des Arbeitsmediums von der Expansionsmaschine (18) zu einem Kondensator (19),
- Kühlen und Kondensieren des Arbeitsmediums in dem Kondensator (19),
wobei das Arbeitsmedium nach dem Durchleiten durch den Kondensator (19), insbesondere ausschließlich, zuerst dem Verdampferabgasrückführwärmeübertrager (17) zugeführt wird,
**dadurch gekennzeichnet, dass**
das Abgas durch den Verdampferabgasrückführwärmeübertrager Temperaturen im Bereich von 500 bis 700°C aufweist und das Abgas durch den Verdampferabgaswärmeübertrager Temperaturen im Bereich von 280 bis 380°C aufweist.

7. Verfahren nach Anspruch 6,
**dadurch gekennzeichnet, dass**
das Arbeitsmedium nach dem Durchleiten durch den Verdampferabgasrückführwärmeübertrager (17), insbesondere ausschließlich, dem Verdampferabgaswärmeübertrager (16) zugeführt wird.

8. Verfahren nach Anspruch 6 oder 7,
**dadurch gekennzeichnet, dass**
das Arbeitsmedium während des Leitens von dem Kondensator (19) zu dem Verdampferabgasrückführwärmeübertrager (17) durch keinen Wärmeübertrager, insbesondere Abgaswärmeübertrager oder Verdampfer (15), geleitet wird
und/oder
das Arbeitsmedium während des Leitens von dem Verdampferabgasrückführwärmeübertrager (17) zu dem Verdampferabgaswärmeübertrager (16) durch keinen Wärmeübertrager, insbesondere Abgaswärmeübertrager oder Verdampfer (15), geleitet wird.

9. Verfahren nach einem oder mehreren der Ansprüche 6 bis 8,
**dadurch gekennzeichnet, dass**
das durch den Verdampferabgaswärmeübertrager (16) geleitete Abgas in die Umgebung abgeleitet wird und das durch dem Verdampferabgasrückführwärmeübertrager (17) geleitete Abgas dem Verbrennungsmotor (1) zugeführt wird.

10. Verfahren nach einem oder mehreren der Ansprüche 6 bis 9,
**dadurch gekennzeichnet, dass**
das Arbeitsmedium in dem Kreislauf als Wärmeübertrager nur durch den Kondensator (19), den Verdampferabgaswärmeübertrager (16) und den Verdampferabgasrückführwärmeübertrager (17) geleitet wird und/oder
das Arbeitsmedium von einer Arbeitsmediumpumpe (14) in einem Kreislauf gefördert wird.

## Claims

1. An internal combustion engine (1) having a system (3) for utilising the waste heat from the internal combustion engine (1) via the Clausius-Rankine cycle process, the system (3) comprising
- a circuit having lines (13) with a working medium, in particular water, for forming the system (3),
- a working medium pump (14) for delivering the working medium,
- a vaporiser-exhaust gas heat exchanger (16) and a vaporiser-EGR heat exchanger (17) for heating and/or vaporising the liquid working medium with the exhaust gas,
- an expander (18),
- a condenser (19) for liquefying the vaporous working medium,
- preferably a collecting and equalising tank (21) for the liquid working medium,
wherein the line (13) for the working medium is run from the condenser (19) to the vaporiser-EGR heat exchanger (17), so that the working medium after flowing through the condenser (19) first flows through the vaporiser-EGR heat exchanger (17) and the line (13) for the working medium is run from the vaporiser-EGR heat exchanger (17) to the vaporiser-exhaust gas heat exchanger (16), so that the working medium after flowing through the vaporiser-EGR heat exchanger (17) first flows through the vaporiser-exhaust gas heat exchanger (16),
**characterised in that**
the exhaust gas through the vaporiser-EGR heat exchanger has temperatures in the range from 500 to 700°C and the exhaust gas through the vaporiser-exhaust gas heat exchanger has temperatures in the range from 280 to 380°C.

2. The internal combustion engine according to claim 1, **characterised in that**
the working medium, passed through the vaporiser-EGR heat exchanger (17), is exclusively the working medium discharged directly from the condenser (19), and/or
the working medium, passed through the vaporiser-exhaust gas heat exchanger (16), is exclusively the working medium discharged directly from the vaporiser-EGR heat exchanger (17).

3. The internal combustion engine according to claim 1 or 2,
**characterised in that**
the circuit for the working medium does not have a line (13) leading directly from the condenser (19) to the vaporiser-exhaust gas heat exchanger (16)
and/or
an outlet opening for the exhaust gas from the vaporiser-exhaust gas heat exchanger (16) opens into the environment and an outlet opening for the exhaust gas from the vaporiser-EGR heat exchanger (17) opens into a charge air line (27).

4. The internal combustion engine according to one or more of the preceding claims,
**characterised in that**
the working medium and the exhaust gas can be conveyed through the vaporiser-exhaust gas heat exchanger (16) according to the counterflow principle.

5. The internal combustion engine according to one or more of the preceding claims,
**characterised in that**
the working medium and the exhaust gas can be conveyed through the vaporiser-EGR heat exchanger (17) according to the counterflow principle
and/or
a method according to one or more of claims 6 to 10 can be performed by the internal combustion engine (1).

6. A method for operating an internal combustion engine (1) having a system (3) for utilising the waste heat from the internal combustion engine (1) via the Clausius-Rankine cycle process, in particular an internal combustion engine (1) according to one or more of the preceding claims, comprising the following steps:
- passing a working medium through a vaporiser-exhaust gas heat exchanger (16) and a vaporiser-EGR heat exchanger (17), so that the working medium is heated and vaporised,
- passing the exhaust gas through the vaporiser-exhaust gas heat exchanger (16) and the vaporiser-EGR heat exchanger (17),
- conveying the gaseous working medium to an expander (18) in which the gaseous working medium expands and performs work,
- conveying the working medium from the expander (18) to a condenser (19),
- cooling and condensing the working medium in the condenser (19),
wherein the working medium after passage through the condenser (19) is supplied first, in particular exclusively, to the vaporiser-EGR heat exchanger (17),
**characterised in that**
the exhaust gas through the vaporiser-EGR heat exchanger has temperatures in the range from 500 to 700°C and the exhaust gas through the vaporiser-exhaust gas heat exchanger has temperatures in the range from 280 to 380°C.

7. The method according to claim 6,
**characterised in that**
the working medium after passage through the vaporiser-EGR heat exchanger (17) is supplied, in particular exclusively, to the vaporiser-exhaust gas heat exchanger (16).

8. The method according to claim 6 or 7,
**characterised in that**
the working medium during conveying from the condenser (19) to the vaporiser-EGR heat exchanger (17) is not passed through any heat exchanger, in particular exhaust gas heat exchanger or vaporiser (15)
and/or
the working medium during conveying from the vaporiser-EGR heat exchanger (17) to the vaporiser-exhaust gas heat exchanger (16) is not passed through any heat exchanger, in particular exhaust gas heat exchanger or vaporiser (15).

9. The method according to one or more of claims 6 to 8, **characterised in that**
the exhaust gas passed through the vaporiser-exhaust gas heat exchanger (16) is discharged into the environment and the exhaust gas passed through the vaporiser-EGR heat exchanger (17) is supplied to the internal combustion engine (1).

10. The method according to one or more of claims 6 to 9, **characterised in that**
the working medium in the circuit as a heat exchanger is passed only through the condenser (19), the vaporiser-exhaust gas heat exchanger (16) and the vaporiser-EGR heat exchanger (17)
and/or
the working medium is delivered by a working medium pump (14) in a circuit.

## Revendications

1. Moteur à combustion interne (1) comprenant un système (3) servant à l'utilisation de la chaleur dissipée par le moteur à combustion interne (1), au moyen du processus du cycle de Clausius Rankine, le système (3) comprenant
- un circuit comportant des conduites (13) comprenant un milieu de travail, en particulier de l'eau, servant à la formation du système (3),
- une pompe du milieu de travail (14) servant à fournir le milieu de travail,
- un échangeur de chaleur (16) des gaz d'échappement de l'évaporateur et un échangeur de chaleur (17) de recyclage des gaz d'échappement de l'évaporateur servant au chauffage et / ou à l'évaporation du milieu de travail liquide avec des gaz d'échappement,
- une machine à expansion (18),
- un condenseur (19) servant à la liquéfaction du milieu de travail à l'état de vapeur,
- de préférence un réservoir récepteur et de compensation (21) pour le milieu de travail liquide,
où la conduite (13) prévue pour le milieu de travail est guidée depuis le condenseur (19) jusqu'à l'échangeur de chaleur (17) de recyclage des gaz d'échappement de l'évaporateur, de sorte que le milieu de travail, après avoir traversé le condenseur (19), traverse d'abord l'échangeur de chaleur (17) de recyclage des gaz d'échappement de l'évaporateur, et la conduite (13) prévue pour le milieu de travail est guidée depuis l'échangeur de chaleur (17) de recyclage des gaz d'échappement de l'évaporateur, jusqu'à l'échangeur de chaleur (16) des gaz d'échappement de l'évaporateur, de sorte que le milieu de travail, après avoir traversé l'échangeur de chaleur (17) de recyclage des gaz d'échappement de l'évaporateur, traverse d'abord l'échangeur de chaleur (16) des gaz d'échappement de l'évaporateur,
**caractérisé en ce que**
les gaz d'échappement en circulation à travers l'échangeur de chaleur de recyclage des gaz d'échappement de l'évaporateur présentent des températures situées dans la plage comprise entre 500°C et 700°C, et les gaz d'échappement en circulation à travers l'échangeur de chaleur des gaz d'échappement de l'évaporateur présentent des températures situées dans la plage comprise entre 280°C et 380°C.

2. Moteur à combustion interne selon la revendication 1, **caractérisé en ce que**
le milieu de travail dirigé à travers l'échangeur de chaleur (17) de recyclage des gaz d'échappement de l'évaporateur est exclusivement le milieu de travail évacué directement du condenseur (19),
et / ou
le milieu de travail dirigé à travers l'échangeur de chaleur (16) des gaz d'échappement de l'évaporateur est exclusivement le milieu de travail évacué directement de l'échangeur de chaleur (17) de recyclage des gaz d'échappement de l'évaporateur.

3. Moteur à combustion interne selon la revendication 1 ou 2,
**caractérisé en ce que**
le circuit prévu pour le milieu de travail ne présente aucune conduite (13) allant directement depuis le condenseur (19) jusqu'à l'échangeur de chaleur (16) des gaz d'échappement de l'évaporateur, et / ou
une ouverture de sortie prévue pour des gaz d'échappement de l'échangeur de chaleur (16) des gaz d'échappement de l'évaporateur débouche dans le milieu environnant, et une ouverture de sortie prévue pour des gaz d'échappement de l'échangeur de chaleur (17) de recyclage des gaz d'échappement de l'évaporateur débouche dans une conduite d'air de suralimentation (27).

4. Moteur à combustion interne selon l'une quelconque ou plusieurs des revendications précédentes,
**caractérisé en ce que**
le milieu de travail et les gaz d'échappement peuvent être dirigés à travers l'échangeur de chaleur (16) des gaz d'échappement de l'évaporateur, suivant le principe de circulation à flux inversés.

5. Moteur à combustion interne selon l'une quelconque ou plusieurs des revendications précédentes,
**caractérisé en ce que**
le milieu de travail et les gaz d'échappement peuvent être dirigés à travers l'échangeur de chaleur (17) de recyclage des gaz d'échappement de l'évaporateur, suivant le principe de circulation à flux inversés, et / ou
un procédé selon l'une quelconque ou plusieurs des revendications 6 à 10 peut être mis en oeuvre par le moteur à combustion interne (1).

6. Procédé de fonctionnement d'un moteur à combustion interne (1) avec un système (3) servant à l'utilisation de la chaleur dissipée par le moteur à combustion interne (1), au moyen du processus du cycle de Clausius Rankine, en particulier d'un moteur à combustion interne (1) selon l'une quelconque ou plusieurs des revendications précédentes, comprenant les étapes consistant :
- à diriger un milieu de travail à travers un échangeur de chaleur (16) des gaz d'échappement de l'évaporateur et à travers un échangeur de chaleur (17) de recyclage des gaz d'échappement de l'évaporateur, de sorte que le milieu de travail est chauffé et évaporé,
- à diriger des gaz d'échappement à travers l'échangeur de chaleur (16) des gaz d'échappement de l'évaporateur et à travers l'échangeur de chaleur (17) de recyclage des gaz d'échappement de l'évaporateur,
- à diriger le milieu de travail gazeux jusqu'à une machine à expansion (18) dans laquelle le milieu de travail gazeux se détend et effectue le travail,
- à diriger le milieu de travail depuis la machine à expansion (18) jusqu'à un condenseur (19),
- à refroidir et à condenser le milieu de travail dans le condenseur (19),
où le milieu de travail, après avoir été dirigé à travers le condenseur (19), est fourni, en particulier exclusivement, d'abord à l'échangeur de chaleur (17) de recyclage des gaz d'échappement de l'évaporateur,
**caractérisé en ce que** les gaz d'échappement en circulation à travers l'échangeur de chaleur de recyclage des gaz d'échappement de l'évaporateur présentent des températures situées dans la plage comprise entre 500°C et 700°C, et les gaz d'échappement en circulation à travers l'échangeur de chaleur des gaz d'échappement de l'évaporateur présentent des températures situées dans la plage comprise entre 280°C et 380°C.

7. Procédé selon la revendication 6,
**caractérisé en ce que**
le milieu de travail, après avoir été dirigé à travers l'échangeur de chaleur (17) de recyclage des gaz d'échappement de l'évaporateur, est fourni, en particulier exclusivement, à l'échangeur de chaleur (16) des gaz d'échappement de l'évaporateur.

8. Procédé selon la revendication 6 ou 7, **caractérisé en ce que**
le milieu de travail, au cours de la circulation depuis le condenseur (19) jusqu'à l'échangeur de chaleur (17) de recyclage des gaz d'échappement de l'évaporateur, est dirigé en ne traversant aucun échangeur de chaleur, en particulier aucun échangeur de chaleur de gaz d'échappement ni aucun évaporateur (15),
et / ou
le milieu de travail, au cours de la circulation depuis l'échangeur de chaleur (17) de recyclage des gaz d'échappement de l'évaporateur, jusqu'à l'échangeur de chaleur (16) des gaz d'échappement de l'évaporateur, est dirigé en ne traversant aucun échangeur de chaleur, en particulier aucun échangeur de chaleur de gaz d'échappement ni aucun évaporateur (15).

9. Procédé selon l'une quelconque ou plusieurs des revendications 6 à 8,
**caractérisé en ce que**
les gaz d'échappement dirigés à travers l'échangeur de chaleur (16) des gaz d'échappement de l'évaporateur sont déviés dans le milieu environnant, et les gaz d'échappement dirigés à travers l'échangeur de chaleur (17) de recyclage des gaz d'échappement de l'évaporateur sont fournis au moteur à combustion interne (1).

10. Procédé selon l'une quelconque ou plusieurs des revendications 6 à 9,
**caractérisé en ce que**
le milieu de travail, dans le circuit fonctionnant comme échangeur de chaleur, est dirigé seulement à travers le condenseur (19), l'échangeur de chaleur (16) des gaz d'échappement de l'évaporateur et l'échangeur de chaleur (17) de recyclage des gaz d'échappement de l'évaporateur,
et / ou
le milieu de travail fourni par une pompe (14) du milieu de travail est transporté dans un circuit.
